# EUROPEAN PATENT APPLICATION

(11) **EP 4 572 362 A1**
(43) Date of publication of application: **18.06.2025**
(21) Application number: 23858711.7
(22) Date of filing: 04.05.2023
(51) Int. Cl.: H04W 12/122

(54) **DEVICE RECOGNITION METHOD, APPARATUS AND SYSTEM**

(30) Priority: 31.08.2022 CN 202211051831
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN)
(74) Representative: Goddar, Heinz J.
(86) International application number: PCT/CN2023/092010
(87) International publication number: WO 2024/045671

(57) **Abstract**

This application provides a device identification method, an apparatus, and a system. The method includes: A terminal device receives a first signal from an access network device. The terminal device inputs the first signal into an artificial intelligence model, where the artificial intelligence model is used to identify a radio frequency fingerprint of the input signal and output an identification result corresponding to the radio frequency fingerprint. The terminal device determines, based on the identification result output by the artificial intelligence model, whether the access network device is a legitimate device or an illegitimate device. According to the foregoing method, the terminal device inputs the received first signal into the artificial intelligence model, so that the terminal device can determine whether the device sending the first signal is a legitimate device, to improve communication security.

## Description

### CROSS-REFERENCE TO RELATED APPLICATIONS

This application claims priority to Chinese Patent Application No. 202211051831.2, filed with the China National Intellectual Property Administration on August 31, 2022 and entitled "DEVICE IDENTIFICATION METHOD, APPARATUS, AND SYSTEM", which is incorporated herein by reference in its entirety.

### TECHNICAL FIELD

This application relates to the field of communication technologies, and in particular, to a device identification method, an apparatus, and a system.

### BACKGROUND

In a mobile communication system, before accessing a cell, a terminal device needs to obtain system information (system information, SI) of the cell, to access the cell based on the system information and work normally in the cell. When the terminal device works in the cell, if the terminal device determines to perform cell reselection or receives a system information change notification (SI change notification) from a base station, the terminal device may re-obtain system information.

Some network attackers may place a pseudo base station (that is, an illegitimate base station) within coverage of a legitimate base station. The pseudo base station may send a high-power signal, causing the terminal device to mistakenly consider that cell reselection needs to be performed, and reselect a cell of the pseudo base station. Alternatively, the pseudo base station may send a system information change notification to the terminal device, causing the terminal device to obtain system information from the pseudo base station, and access the pseudo base station. If the terminal device accesses the pseudo base station, the pseudo base station provides the terminal device with wrong information, and even spreads a virus to the terminal device. In addition to the foregoing harm, the pseudo base station may intercept content of communication between the legitimate base station and the terminal device, to monitor private data of a user. As a result, a deceptive attack of the pseudo base station on the terminal device interferes with normal communication between a network and the terminal, and affects security performance of the network.

Therefore, how to improve communication security is an issue to be urgently resolved.

### SUMMARY

This application provides a device identification method, an apparatus, and a system, to improve communication security.

According to a first aspect, this application provides a device identification method. The method includes: A terminal device receives a first signal from an access network device. The terminal device inputs the first signal into an artificial intelligence model, where the artificial intelligence model is used to identify a radio frequency fingerprint of the input signal and output an identification result corresponding to the radio frequency fingerprint. The terminal device determines, based on the identification result output by the artificial intelligence model, whether the access network device is a legitimate device or an illegitimate device.

According to the foregoing method, the terminal device inputs the received first signal into the artificial intelligence model, so that the terminal device can determine, based on the identification result output by the artificial intelligence model, whether the device sending the first signal is a legitimate device, to improve communication security.

In an implementation, the method further includes: The terminal device receives the artificial intelligence model from a network data analytics function device.

In an implementation, the artificial intelligence model corresponds to area information, and the artificial intelligence model is valid in an area corresponding to the area information.

In an implementation, the area information may be represented by a cell list or a tracking area list, or represented by a combination of a cell list and a tracking area list, or represented by a frequency information and physical cell identity list.

According to the foregoing method, the terminal device can use the artificial intelligence model in a specified area, to improve model use efficiency.

In an implementation, if the terminal device determines, based on the identification result, that the access network device is an illegitimate device, the method further includes: The terminal device regards information carried by the first signal as invalid information, and ignores the information carried by the first signal.

According to the method, the terminal device can be prevented from obtaining information sent by an illegitimate device, to improve system security.

In an implementation, the information carried by the first signal is system information; the information carried by the first signal is a synchronization signal/physical broadcast channel block; or the information carried by the first signal is a system information change notification.

In an implementation, if the terminal device determines, based on the identification result, that the access network device is an illegitimate device, the method further includes: The terminal device sets a cell of the access network device as a cell on which camping is forbidden, and performs intra-frequency cell reselection.

According to the method, the terminal device can be prevented from camping on a cell of an illegitimate device, to improve system security.

In an implementation, if the terminal device determines, based on the identification result, that the access network device is an illegitimate device, the method further includes: The terminal device deletes the cell of the access network device from a cell selection/reselection candidate list.

According to the method, the terminal device can be prevented from reselecting/reselecting to camp on a cell of an illegitimate device, to improve system security.

According to a second aspect, an embodiment of this application provides a communication system, including: an access network device, configured to send a first signal; and
a terminal device, configured to: receive the first signal from the access network device; input the first signal into an artificial intelligence model, where the artificial intelligence model is used to identify a radio frequency fingerprint of the input signal and output an identification result corresponding to the radio frequency fingerprint; and determine, based on the identification result output by the artificial intelligence model, that the access network device is a legitimate device.

In an implementation, the access network device is further configured to receive the artificial intelligence model from a network data analytics function device, and forward the artificial intelligence model to the terminal device; and the terminal device is further configured to receive the artificial intelligence model from the access network device.

In an implementation, the artificial intelligence model corresponds to area information, and the artificial intelligence model is valid in an area corresponding to the area information.

In an implementation, the area information may be represented by a cell list or a tracking area list, or represented by a combination of a cell list and a tracking area list, or represented by a frequency information and physical cell identity list.

In an implementation, information carried by the first signal is system information; information carried by the first signal is a synchronization signal/physical broadcast channel block; or information carried by the first signal is a system information change notification.

According to a third aspect, an embodiment of this application provides a communication apparatus. The apparatus may be used in a terminal device, and has a function of implementing the method according to the first aspect or any one of the possible implementations of the first aspect. The function may be implemented by hardware, or may be implemented by hardware executing corresponding software. The hardware or the software includes one or more units corresponding to the function. For example, a transceiver unit and a processing unit are included. The transceiver unit may also be referred to as a communication unit or a transceiver module. The transceiver unit may specifically include a receiving unit and a sending unit. The processing unit may also be referred to as a processing module.

According to a fourth aspect, an embodiment of this application provides a communication apparatus. The communication apparatus includes a processor and a memory. The memory stores a computer program or computer instructions, and the processor is configured to invoke and run the computer program or the computer instructions stored in the memory, so that the processor implements the first aspect or any one of the possible implementations of the first aspect.

Optionally, the communication apparatus further includes an interface circuit. The processor is configured to control the interface circuit to receive and send a signal, information, data, and/or the like.

According to a fifth aspect, an embodiment of this application provides a communication apparatus. The communication apparatus includes a processor. The processor is configured to invoke a computer program or computer instructions in a memory, so that the processor implements the first aspect or any one of the possible implementations of the first aspect.

Optionally, the communication apparatus further includes an interface circuit. The processor is configured to control the interface circuit to receive and send a signal, information, data, and/or the like.

According to a sixth aspect, an embodiment of this application provides a communication apparatus. The communication apparatus includes a processor, and the processor is configured to perform the first aspect or any one of the possible implementations of the first aspect.

According to a seventh aspect, an embodiment of this application further provides a computer-readable storage medium, including computer instructions. When the instructions are run on a computer, the computer is enabled to perform the first aspect or any one of the possible implementations of the first aspect.

According to an eighth aspect, an embodiment of this application further provides a chip apparatus, including a processor configured to invoke a computer program or computer instructions in a memory, so that the processor performs the first aspect or any one of the possible implementations of the first aspect. Optionally, the processor is coupled to the memory through an interface.

According to a ninth aspect, an embodiment of this application further provides a computer program product including instructions. When the computer program product is run on a computer, the computer is enabled to perform the first aspect or any one of the possible implementations of the first aspect.

These aspects or another aspect of this application is clearer and more comprehensible in descriptions of the following embodiments.

### BRIEF DESCRIPTION OF DRAWINGS

FIG. 1 is a diagram of a network architecture according to an embodiment of this application;
FIG. 2 is a diagram of artificial intelligence model training according to an embodiment of this application;
FIG. 3 is a schematic flowchart of device identification according to an embodiment of this application;
FIG. 4 is a schematic flowchart of device identification according to an embodiment of this application;
FIG. 5 is a schematic flowchart of device identification according to an embodiment of this application;
FIG. 6 is a schematic flowchart of device identification according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

The following describes in detail embodiments of this application with reference to accompanying drawings of this specification.

Technical solutions of this application may be applied to various communication systems, for example, a long term evolution (long term evolution, LTE) system, a 5th generation (5th generation, 5G) mobile communication system, or a next generation mobile communication system. This is not limited herein. The 5G system may also be referred to as a new radio (new radio, NR) system.

In various embodiments of this application, unless otherwise stated or there is a logic conflict, terms and/or descriptions in different embodiments are consistent and may be mutually referenced, and technical features in different embodiments may be combined based on an internal logical relationship thereof to form a new embodiment.

It may be understood that various numerals used in this application are merely differentiated for ease of description, but are not used to limit the scope of this application. Sequence numbers of processes do not mean an execution sequence. The execution sequence of the processes should be determined based on functions and internal logic of the processes.

In this application, a terminal device may be a device having a wireless transceiver function or a chip that can be disposed in any device. The terminal device may also be referred to as user equipment (user equipment, UE), an access terminal, a subscriber unit, a mobile station, a mobile device, a user terminal, a wireless communication device, a user agent, or a user apparatus. The terminal device in this application may be a mobile phone (mobile phone), a tablet computer (Pad), a computer having a wireless transceiver function, a virtual reality (virtual reality, VR) terminal, an augmented reality (augmented reality, AR) terminal, a wearable device, a vehicle, an unmanned aerial vehicle, an airplane, a ship, a robot, a smart home household, or the like. The terminal device in this application may be widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), internet of things (internet of things, IOT), virtual reality, augmented reality, industrial control, autonomous driving, remote medical, a smart grid, smart furniture, smart office, smart wear, smart transportation, a smart city, or the like. A specific technology and a specific device form that are used by the terminal are not limited in this application.

In this application, an apparatus configured to implement a function of the terminal device may be a terminal device, or may be an apparatus that can support the terminal device in implementing the function, for example, a chip system, a hardware circuit, a software module, or a combination of a hardware circuit and a software module. The apparatus may be installed in the terminal device or may be matched with the terminal device for use.

An access network device may be a base station (base station), an evolved NodeB (evolved NodeB, eNodeB), a transmission reception point (transmission reception point, TRP), a next generation NodeB (next generation NodeB, gNB) in a 5G mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or a unit that completes a part of functions of a base station, for example, may be a central unit (central unit, CU), a distributed unit (distributed unit, DU), a central unit control plane (CU control plane, CU-CP) module, or a central unit user plane (CU user plane, CU-UP) module. A specific technology and a specific device form that are used by the access network device are not limited in this application.

In this application, an apparatus configured to implement a function of the access network device may be an access network device, or may be an apparatus that can support the access network device in implementing the function, for example, a chip system. The apparatus may be installed in the access network device or may be matched with the access network device for use.

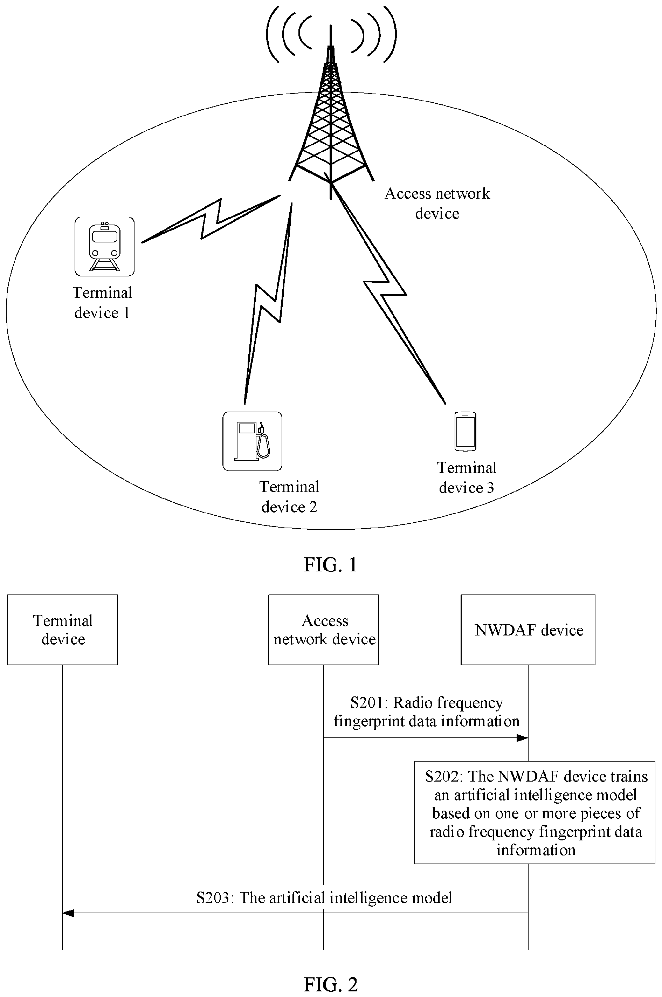

For ease of understanding of this application, a communication system shown in FIG. 1 is first used as an example to describe in detail a communication system applicable to this application. FIG. 1 is a diagram of an architecture of a communication system to which this application may be applied. The communication system includes an access network device and a terminal device. The terminal device may establish a connection to the access network device, and communicate with the access network device. In the communication system, a terminal device 1 to a terminal device 3 may send uplink data to the access network device, and the access network device may send downlink data to the terminal device 1 to the terminal device 3. In addition, a communication system may also be constituted between terminal devices. For example, in an internet of vehicles system, the terminal device 1 sends data to the terminal device 2, and the terminal device 2 receives the data sent by the terminal device 1. In FIG. 1, three terminal devices are used as an example. Quantities of access network devices and terminal devices included in the communication system are not limited in this application.

To implement data transmission between the terminal device and the access network device, the terminal device needs to perform initial access (initial access) to the access network device, and establish a wireless connection to the access network device through a random access process. An NR system is used as an example. The terminal device first obtains a synchronization signal/physical broadcast channel block (synchronization signal/physical broadcast channel block, SS/PBCH block, SSB) broadcast by the access network device. The terminal device obtains a master information block (master information block, MIB) based on the SSB, and then the terminal device determines configuration information of a common search space (common search space, CSS) and a control resource set 0 (control resource set 0, CORESET 0) based on the MIB. Finally, the terminal device obtains a system information block 1 (system information block 1, SIB 1) based on the CORESET 0. The SIB 1 carries information about cell camping and access. The terminal device may complete cell camping based on the SIB 1, and may continue to receive other system information (other system information, OSI), monitor paging (paging) information, initiate a random access (random access, RA) process, and the like. The SIB 1 is also referred to as remaining system information (remaining system information, RMSI), and a SIB other than the SIB 1 is also referred to as OSI.

In the NR system, one piece of OSI is transmitted by using one system information message, and the terminal device performs a system information obtaining process only in a cell selection or cell reselection scenario or a scenario in which a system information change notification (system information change notification) is received.

Based on the foregoing process, after copying system information of a legitimate base station, a pseudo base station may use any one of the following methods to make the terminal device camp on the pseudo base station.

Method 1: The pseudo base station sends a high-power SSB, to make the terminal device perform cell reselection. After the terminal device reselects a cell of the pseudo base station, the pseudo base station provides the terminal device with the system information copied from the legitimate base station, to make the terminal device camp on the cell of the pseudo base station.

Method 2: The pseudo base station sends a system information change notification, to trigger the terminal device to perform reselection and obtain system information. The pseudo base station provides the terminal device with the system information copied from the legitimate base station, to make the terminal device camp on a cell of the pseudo base station.

After the terminal device camps on the cell of the pseudo base station, the pseudo base station may provide the terminal device with wrong information, to achieve a purpose of spreading a virus and the like. In addition to the foregoing harm, the pseudo base station may intercept content of communication between the legitimate base station and the terminal device, to monitor private data of a user. In 5G, there are some new wireless communication scenarios in which a 5G technology is introduced to a private network, for example, an industrial park in an industrial internet, a multicast service network, or an enterprise private network. In these scenarios, security problems caused by pseudo base stations are more serious. This is because terminal devices in these scenarios have higher security requirements. For example, if a terminal device in the industry cannot perform normal communication, a great loss and a security accident are caused. In addition, such terminal devices have low mobility, and once the terminal devices access pseudo base stations, for a long time the terminal devices cannot leave the pseudo base stations to access legitimate base stations.

In view of this, this application provides a method. A terminal device may determine whether a received signal is from a legitimate device, to improve system security. Details are described below.

In this application, an artificial intelligence (artificial intelligence, AI) model is used, to improve security of a communication system. Artificial intelligence can enable a machine to have human-like intelligence, for example, can enable the machine to use computer software and hardware to simulate some intelligent human behavior. Many methods including machine learning may be used, to implement the artificial intelligence. For example, the machine learning includes a neural network (neural network), an expectation maximization algorithm (expectation maximization algorithm), a support vector machine algorithm, boosting (a boosting algorithm), a bootstrap aggregating (bootstrap aggregating, bagging) algorithm, or the like. In this application, a neural network is used as an example for description. For another machine learning algorithm, refer to descriptions of this application. Details are not described herein again.

FIG. 2 is a diagram of artificial intelligence model training according to this application. The method includes the following steps.

S201: An access network device reports radio frequency fingerprint data information to a network data analytics function (network data analytics function, NWDAF) device.

The NWDAF device may alternatively be another type of core network device. This is not limited in this application, provided that the core network device can extract and identify a radio frequency fingerprint based on the radio frequency fingerprint data information to complete identity identification of the access network device.

The radio frequency fingerprint data information includes a digital signal or an analog signal corresponding to information sent by the access network device. For example, the information sent by the access network device is system information. The system information is modulated into a digital signal after a baseband chip of the access network device performs processing such as encoding on the system information. Then, the digital signal is converted into an analog signal through a series of radio frequency transform such as beamforming, inverse fast Fourier transform, peak clipping, digital pre-distortion, inphase quadrature (inphase quadrature, IQ) correction, and digital-to-analog conversion. After radio frequency processing such as IQ mixing and power amplification, the analog signal is sent by using an antenna. The access network device may use a digital signal corresponding to the system information or an analog signal in the foregoing process (for example, an analog signal before and after the inverse fast Fourier transform) as the radio frequency fingerprint data information, and report the radio frequency fingerprint data information to the core network device.

S201 is an optional step, and the access network device may not report radio frequency fingerprint data information. If the access network device does not report radio frequency fingerprint data information, an operation, administration, and maintenance (operation, administration, and maintenance, OAM) device may report, to the core network device, drive test data collected by a terminal device through minimization of drive tests (minimization of drive tests, MDT). The drive test data includes an analog signal or a digital signal that corresponds to information sent by the access network device and that is received by the terminal device serving as a receiving end, for example, an analog signal before and after fast Fourier transform is performed on a baseband signal, where the baseband signal is obtained by performing radio frequency processing on a radio frequency signal received by using an antenna. The core network device may obtain radio frequency fingerprint data information of the access network device based on the drive test data. The OAM device is configured to operate, administrate, and/or maintain the core network device, and/or is configured to operate, administrate, and/or maintain the access network device.

S202: The NWDAF device trains an artificial intelligence model based on one or more pieces of radio frequency fingerprint data information.

The NWDAF device may obtain radio frequency fingerprint data information of a plurality of access network devices. A specific process in which the NWDAF device trains the artificial intelligence model based on the one or more pieces of radio frequency fingerprint data information is not limited in this application. In this application, the artificial intelligence model trained by the NWDAF device is used to identify a radio frequency fingerprint of an input signal and output an identification result corresponding to the radio frequency fingerprint. The identification result may indicate whether the input signal is from a legitimate device.

For example, the NWDAF device may perform domain transform, for example, bispectrum transform or wavelet transform, on each piece of radio frequency fingerprint data information by using the artificial intelligence model, to obtain a feature vector of the radio frequency fingerprint data information, and use the feature vector as a radio frequency fingerprint of the access network device. The NWDAF device uses radio frequency fingerprint data information and identification information of a plurality of legitimate access network devices to train the artificial intelligence model, and may establish, by using the artificial intelligence model, a mapping relationship between the radio frequency fingerprint data information and the identification information of the access network device.

After the NWDAF device completes training of the artificial intelligence model, and a signal is input, the artificial intelligence model may determine a radio frequency fingerprint of the signal, to determine whether identification information mapped to the radio frequency fingerprint is present. In an implementation, if the identification information mapped to the radio frequency fingerprint is present, the artificial intelligence model may output the identification information, and the terminal device may determine that the signal is from a legitimate device; or if the identification information mapped to the radio frequency fingerprint is absent, the artificial intelligence model may output indication information indicating that the identification information cannot be obtained, and the terminal device may determine that the signal is from an illegitimate device.

Specific feature vectors used as radio frequency fingerprints are not limited in this application. In an implementation, to implement high-precision identification, in this application, at least one of the following features may be considered for selection of a radio frequency fingerprint.
(1) Universality, indicating that each wireless device needs to have a function used for identification.
(2) Uniqueness, indicating that fingerprints of any two devices shall not be the same.
(3) Permanence, indicating that a fingerprint needs to have time invariance and environmental invariance.
(4) Collectability, indicating that an existing device may be used to quantitatively measure a fingerprint.
(5) Robustness, indicating that external environment aspects, such as signal reflection and absorption, and device-related aspects, such as temperature, power, and a voltage level, need to be considered for fingerprint evaluation.

After completing training of the artificial intelligence model, the NWDAF device may send the artificial intelligence model to the terminal device.

S203: The NWDAF device sends the trained artificial intelligence model to the terminal device.

The NWDAF device may first send the artificial intelligence model to an access and mobility management function (access and mobility management function, AMF) device, and then the AMF device sends the artificial intelligence model to the terminal device.

The NWDAF device may directly send the artificial intelligence model to the terminal device, or may indicate a model download address to the terminal device, and the terminal device may download the artificial intelligence model based on the model download address.

In an implementation, the NWDAF device may further indicate to the terminal device that the artificial intelligence model corresponds to area information, and the artificial intelligence model is valid in an area corresponding to the area information. In this case, the terminal device uses the artificial intelligence model in the area corresponding to the area information, and no longer uses the artificial intelligence model outside the area corresponding to the area information. The area information may be represented by a cell list or a tracking area list, or represented by a combination of a cell list and a tracking area list, or represented by a frequency information and physical cell identity list.

In an implementation, the NWDAF device may periodically update the artificial intelligence model, and indicate an updated artificial intelligence model to the terminal device.

With the use of the foregoing method, a network can construct a radio frequency fingerprint library of legitimate access network devices, and send, to a terminal device, an artificial intelligence model that can identify a radio frequency fingerprint in the radio frequency fingerprint library, so that the terminal device can identify a radio frequency fingerprint of a received signal by using the artificial intelligence model, to distinguish between a legitimate device and an illegitimate device.

The following uses a specific procedure to describe how a terminal device distinguishes between a legitimate device and an illegitimate device.

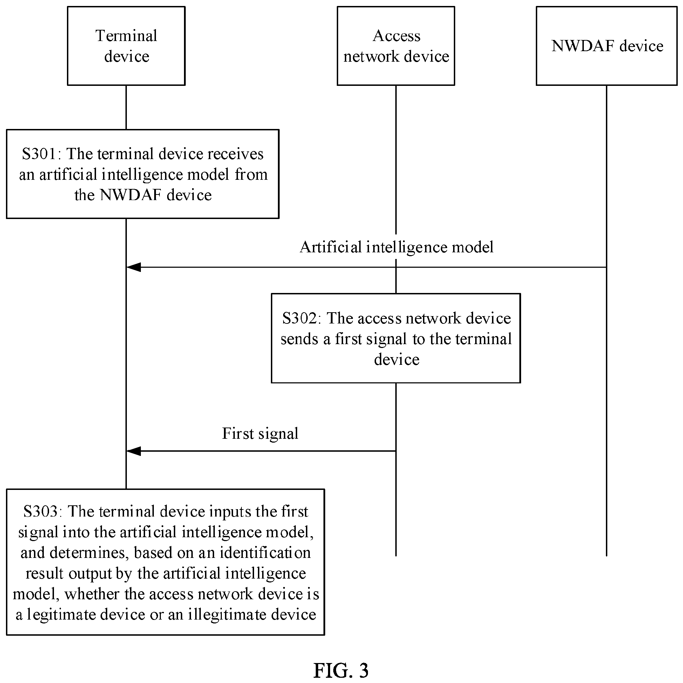

FIG. 3 is a schematic flowchart of device identification according to this application. The method includes the following steps.

S301: A terminal device receives an artificial intelligence model from an NWDAF device.

The NWDAF device may send the artificial intelligence model to the terminal device through an AMF device. A specific process is not limited in this application.

In an implementation, the terminal device may receive the artificial intelligence model in a security mode. In the security mode, the artificial intelligence model is encrypted in a transmission process, and the terminal device can use the received artificial intelligence model only after decrypting the received artificial intelligence model. Specific encryption and decryption processes are not limited in this application.

In an implementation, the terminal device may further obtain area information corresponding to the artificial intelligence model.

S302: An access network device sends a first signal to the terminal device, and correspondingly, the terminal device receives the first signal from the access network device.

Specific content of information carried by the first signal is not limited in this application. For example, the information carried by the first signal is system information, and the system information includes at least one of a SIB 1 and OSI; or the information carried by the first signal is an SSB; or the information carried by the first signal is a system information change notification.

In an implementation, based on different information carried by first signals, different artificial intelligence models may be trained for different information. For example, for system information, the NWDAF device may train an artificial intelligence model specially used to identify a signal carrying the system information; for an SSB, the NWDAF device may train an artificial intelligence model specially used to identify a signal carrying the SSB; and for a system information change notification, the NWDAF device may train an artificial intelligence model specially used to identify a signal carrying the system information change notification. In this implementation, the terminal device may determine, based on content of the information carried by the first signal, an artificial intelligence model for identifying the signal.

S303: The terminal device inputs the first signal into the artificial intelligence model, and determines, based on an identification result output by the artificial intelligence model, whether the access network device is a legitimate device or an illegitimate device.

The artificial intelligence model is used to identify a radio frequency fingerprint of the input signal and output the identification result corresponding to the radio frequency fingerprint.

In an implementation, if the artificial intelligence model identifies that identification information mapped to the radio frequency fingerprint of the signal is present, the artificial intelligence model may output the identification information, and the terminal device may determine that the signal is from a legitimate device; or if the artificial intelligence model identifies that identification information mapped to the radio frequency fingerprint of the signal is absent, the artificial intelligence model may output indication information indicating that the identification information cannot be obtained, and the terminal device may determine that the signal is from an illegitimate device.

In an implementation, if the artificial intelligence model identifies that identification information mapped to the radio frequency fingerprint of the signal is present, the artificial intelligence model may output first information, and the first information indicates that the signal is from a legitimate device, for example, the first information is 1; or if the artificial intelligence model identifies that identification information mapped to the radio frequency fingerprint of the signal is absent, the artificial intelligence model may output second information, and the second information indicates that the signal is from an illegitimate device, for example, the second information is 0. Alternatively, the first information is identification information of the access network device, for example, a physical cell identity (physical cell identity, PCI) or a cell global identity (cell global identity, CGI). If identification information that is mapped to the radio frequency fingerprint of the signal and that is output by the artificial intelligence model is inconsistent with identification information currently received by the terminal device, for example, a PCI, the terminal device determines that the signal is from an illegitimate device.

In an implementation, before the terminal device inputs the first signal into the artificial intelligence model, the terminal device may determine whether a currently accessed cell is located in an area indicated by the area information corresponding to the artificial intelligence model. If the currently accessed cell is located outside the area indicated by the area information, the artificial intelligence model is not used; or if the currently accessed cell is located in the area indicated by the area information, the artificial intelligence model is used.

In this application, if the terminal device determines, based on the identification result output by the artificial intelligence model, that the access network device is an illegitimate device, the terminal device regards the information carried by the first signal as invalid information, and ignores the information carried by the first signal.

According to the method, if the access network device is an illegitimate device, even if the information carried by the first signal of the access network device is copied from information broadcast by a legitimate device, the terminal device may identify, based on the first signal, that the access network device is an illegitimate device, so that the terminal device no longer considers that the information carried by the first signal is valid information, to ensure communication security.

In an implementation, if the terminal device determines, based on the identification result output by the artificial intelligence model, that the access network device is an illegitimate device, the terminal device deletes a cell of the access network device from a cell selection/reselection candidate list, to avoid accessing the cell of the access network device again next time, and improve system security.

According to the foregoing method, the terminal device inputs the received first signal into the artificial intelligence model, so that the terminal device can determine, based on the identification result of the artificial intelligence model, whether the device sending the first signal is a legitimate device, to complete identification of a pseudo base station and a legitimate base station, and improve communication security.

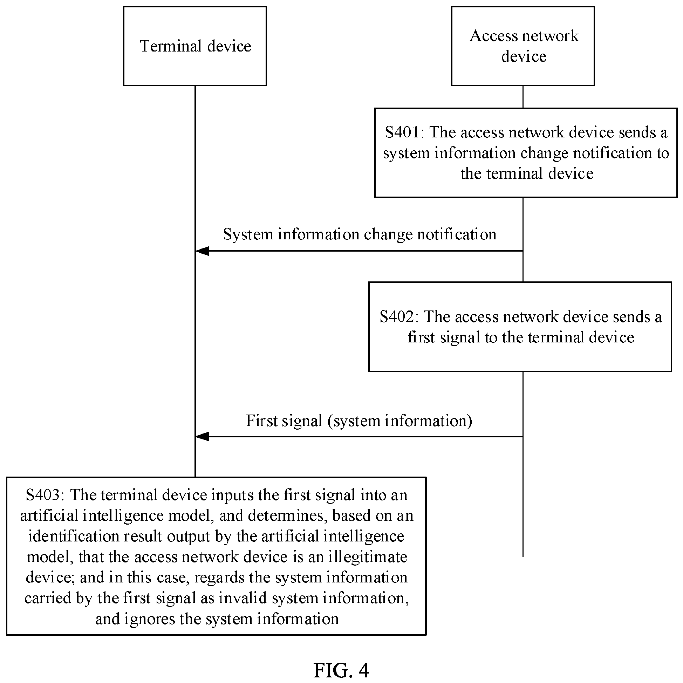

For example, FIG. 4 is a schematic flowchart of device identification according to this application. It is assumed that information carried by a first signal is system information. The method includes the following steps.

S401: An access network device sends a system information change notification to a terminal device, and correspondingly, the terminal device receives the system information change notification from the access network device.

The system information change notification indicates that system information needs to be changed. After receiving the system information change notification, the terminal device determines that system information needs to be updated, to prepare to receive new system information.

S402: The access network device sends a first signal to the terminal device, where the first signal is used to carry system information.

S403: The terminal device inputs the first signal into an artificial intelligence model, and determines, based on an identification result output by the artificial intelligence model, that the access network device is an illegitimate device; and in this case, regards the system information carried by the first signal as invalid system information, and ignores the system information.

In another implementation, if the terminal device determines, based on the identification result output by the artificial intelligence model, that the access network device is a legitimate device, the terminal device uses the system information as updated system information.

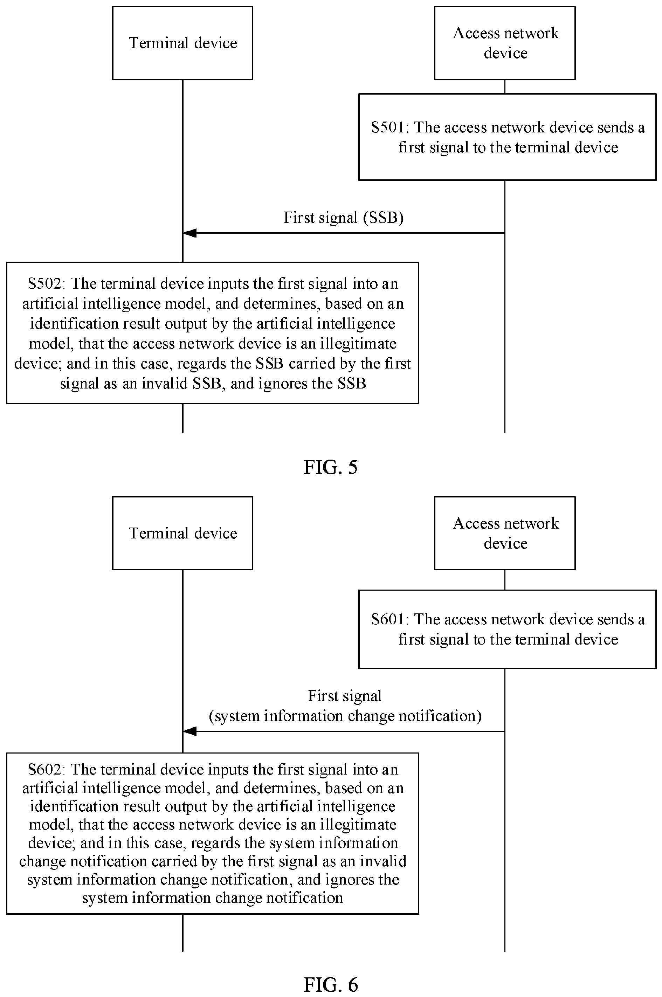

For example, FIG. 5 is a schematic flowchart of device identification according to this application. It is assumed that information carried by a first signal is an SSB. The method includes the following steps.

S501: An access network device sends a first signal to a terminal device, and correspondingly, the terminal device receives the first signal from the access network device.

The first signal is used to carry an SSB. The access network device may send the SSB at high power, causing the terminal device to prepare to camp on a cell of the access network device.

S502: The terminal device inputs the first signal into an artificial intelligence model, and determines, based on an identification result output by the artificial intelligence model, that the access network device is an illegitimate device; and in this case, regards the SSB carried by the first signal as an invalid SSB, and ignores the SSB.

In another implementation, if the terminal device determines, based on the identification result output by the artificial intelligence model, that the access network device is a legitimate device, the terminal device receives system information from the access network device based on the SSB.

For example, FIG. 6 is a schematic flowchart of device identification according to this application. It is assumed that information carried by a first signal is a system information change notification. The method includes the following steps.

S601: An access network device sends a first signal to a terminal device, and correspondingly, the terminal device receives the first signal from the access network device.

The first signal is used to carry a system information change notification.

S602: The terminal device inputs the first signal into an artificial intelligence model, and determines, based on an identification result output by the artificial intelligence model, that the access network device is an illegitimate device; and in this case, regards the system information change notification carried by the first signal as an invalid system information change notification, and ignores the system information change notification.

In another implementation, if the terminal device determines, based on the identification result output by the artificial intelligence model, that the access network device is a legitimate device, the terminal device receives system information from the access network device based on the system information change notification.

In the foregoing embodiments provided in this application, the method provided in embodiments of this application is described from a perspective of interaction between devices. To implement functions in the method provided in embodiments of this application, the access network device or the terminal device may include a hardware structure and/or a software module, and implement the functions in a form of the hardware structure, the software module, or a combination of the hardware structure and the software module. Whether a function in the functions is performed by using the hardware structure, the software module, or the combination of the hardware structure and the software module depends on particular applications and design constraints of the technical solutions.

In embodiments of this application, module division is an example, and is merely logical function division. During actual implementation, another division manner may be used. In addition, functional modules in embodiments of this application may be integrated into one processor, or may be present alone physically, or two or more modules may be integrated into one module. The integrated module may be implemented in a form of hardware, or may be implemented in a form of a software functional module.

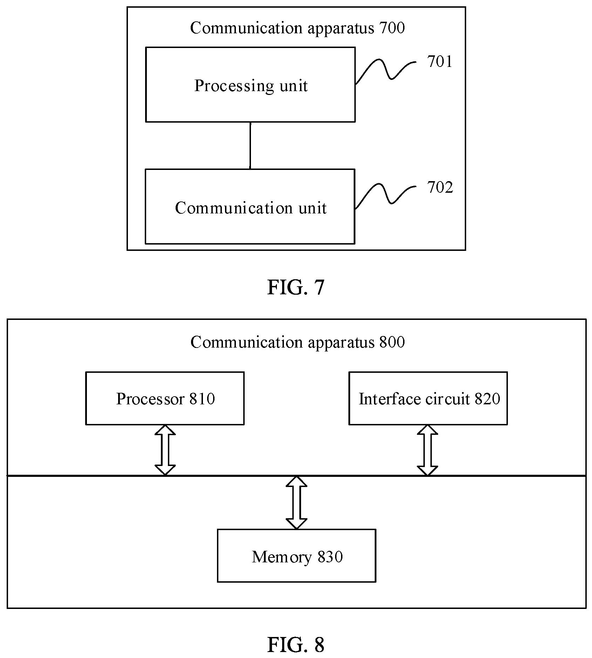

Same as the foregoing idea, as shown in FIG. 7, an embodiment of this application further provides a communication apparatus 700, configured to implement a function of the access network device or the terminal device in the foregoing method. For example, the apparatus may be a software module or a chip system. In this embodiment of this application, the chip system may include a chip, or may include a chip and another discrete component. The communication apparatus 700 may include a processing unit 701 and a communication unit 702.

In this embodiment of this application, the communication unit may also be referred to as a transceiver unit, and may include a sending unit and/or a receiving unit, which are respectively configured to perform sending and receiving steps of the access network device or the terminal device in the foregoing method embodiment.

The following describes in detail the communication apparatus provided in this embodiment of this application with reference to FIG. 7 and FIG. 8. It should be understood that descriptions of the apparatus embodiment correspond to the descriptions of the method embodiment. Therefore, for content that is not described in detail, refer to the method embodiment. For brevity, details are not described herein again.

The communication unit may also be referred to as an interface circuit, a transceiver machine, a transceiver apparatus, or the like. The processing unit may also be referred to as a processor, a processing board, a processing module, a processing apparatus, or the like. Optionally, a component that is in the communication unit 702 and that is configured to implement a receiving function may be considered as a receiving unit, and a component that is in the communication unit 702 and that is configured to implement a sending function may be considered as a sending unit. In other words, the communication unit 702 includes the receiving unit and the sending unit. The communication unit sometimes may also be referred to as a transceiver machine, an interface circuit, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 700 performs a function of the terminal device in the procedure shown in FIG. 3 in the foregoing embodiment:
the communication unit is configured to receive a first signal from an access network device; and
the processing unit is configured to: input the first signal into an artificial intelligence model, where the artificial intelligence model is used to identify a radio frequency fingerprint of the input signal and output an identification result corresponding to the radio frequency fingerprint; and determine, based on the identification result output by the artificial intelligence model, whether the access network device is a legitimate device or an illegitimate device.

In an implementation, the communication unit is further configured to receive the artificial intelligence model from a network data analytics function device.

In an implementation, the artificial intelligence model corresponds to area information, and the artificial intelligence model is valid in an area corresponding to the area information.

In an implementation, if the processing unit determines, based on the identification result, that the access network device is an illegitimate device, the processing unit is further configured to: regard information carried by the first signal as invalid information, and ignore the information carried by the first signal.

In an implementation, the information carried by the first signal is system information; the information carried by the first signal is a synchronization signal/physical broadcast channel block; or the information carried by the first signal is a system information change notification.

In an implementation, if the processing unit determines, based on the identification result, that the access network device is an illegitimate device, the processing unit is further configured to: set a cell of the access network device as a cell on which camping is forbidden, and perform intra-frequency cell reselection.

In an implementation, if the processing unit determines, based on the identification result, that the access network device is an illegitimate device, the processing unit is further configured to: delete the cell of the access network device from a cell selection/reselection candidate list.

The foregoing is merely an example. The processing unit 701 and the communication unit 702 may further perform other functions. For more detailed descriptions, refer to related descriptions of the method embodiment shown in FIG. 3. Details are not described herein again.

FIG. 8 shows a communication apparatus 800 according to an embodiment of this application. The apparatus shown in FIG. 8 may be an implementation of a hardware circuit of the apparatus shown in FIG. 7. The communication apparatus is applicable to the foregoing flowcharts, and performs a function of the terminal device or the access network device in the foregoing method embodiment. For ease of description, FIG. 8 shows only main components of the communication apparatus.

As shown in FIG. 8, the communication apparatus 800 includes a processor 810 and an interface circuit 820. The processor 810 and the interface circuit 820 are coupled to each other. It may be understood that the interface circuit 820 may be a communication interface, a pin, an interface circuit, or an input/output interface. Optionally, the communication apparatus 800 may further include a memory 830, configured to store instructions to be executed by the processor 810, or store input data required by the processor 810 to run instructions, or store data generated after the processor 810 runs instructions.

When the communication apparatus 800 is configured to implement the method shown in FIG. 3, the processor 810 is configured to implement a function of the processing unit 701, and the interface circuit 820 is configured to implement a function of the communication unit 702.

When the communication apparatus is a chip used in a terminal device, the chip in the terminal device implements a function of the terminal device in the foregoing method embodiment. The chip in the terminal device receives information from another module (for example, a radio frequency module or an antenna) in the terminal device, and the information is sent by an access network device to the terminal device. Alternatively, the chip in the terminal device sends information to another module (for example, a radio frequency module or an antenna) in the terminal device, and the information is sent by the terminal device to an access network device.

When the communication apparatus is a chip used in an access network device, the chip in the access network device implements a function of the access network device in the foregoing method embodiment. The chip in the access network device receives information from another module (for example, a radio frequency module or an antenna) in the access network device, and the information is sent by a terminal device to the access network device. Alternatively, the chip in the access network device sends information to another module (for example, a radio frequency module or an antenna) in the access network device, and the information is sent by the access network device to a terminal device.

It may be understood that, the processor in embodiments of this application may be a central processing unit, or may be another general-purpose processor, a digital signal processor, an application-specific integrated circuit or another programmable logic device, a transistor logic device, a hardware component, or any combination thereof. The general-purpose processor may be a microprocessor or any conventional processor.

The memory in embodiments of this application may be a random access memory, a flash memory, a read-only memory, a programmable read-only memory, an erasable programmable read-only memory, an electrically erasable programmable read-only memory, a register, a hard disk drive, a removable hard disk drive, or any other form of storage medium well-known in the art.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus configured to implement a specified function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that the modifications and variations fall within the scope of the claims of this application and their equivalent technologies.

## Claims

1. A device identification method, comprising:
receiving, by a terminal device, a first signal from an access network device;
inputting, by the terminal device, the first signal into an artificial intelligence model, wherein the artificial intelligence model is used to identify a radio frequency fingerprint of the input signal and output an identification result corresponding to the radio frequency fingerprint; and
determining, by the terminal device based on the identification result output by the artificial intelligence model, whether the access network device is a legitimate device or an illegitimate device.

2. The method according to claim 1, wherein the method further comprises:
receiving, by the terminal device, the artificial intelligence model from a network data analytics function device.

3. The method according to claim 1 or 2, wherein the artificial intelligence model corresponds to area information, and the artificial intelligence model is valid in an area corresponding to the area information.

4. The method according to any one of claims 1 to 3, wherein if the terminal device determines, based on the identification result, that the access network device is an illegitimate device, the method further comprises:
regarding, by the terminal device, information carried by the first signal as invalid information, and ignoring the information carried by the first signal.

5. The method according to claim 4, wherein the information carried by the first signal is system information;
the information carried by the first signal is a synchronization signal/physical broadcast channel block; or
the information carried by the first signal is a system information change notification.

6. The method according to any one of claims 1 to 5, wherein if the terminal device determines, based on the identification result, that the access network device is an illegitimate device, the method further comprises:
setting, by the terminal device, a cell of the access network device as a cell on which camping is forbidden, and performing intra-frequency cell reselection.

7. The method according to any one of claims 1 to 6, wherein if the terminal device determines, based on the identification result, that the access network device is an illegitimate device, the method further comprises:
deleting, by the terminal device, the cell of the access network device from a cell selection/reselection candidate list.

8. A communication system, comprising:
an access network device, configured to send a first signal; and
a terminal device, configured to: receive the first signal from the access network device; input the first signal into an artificial intelligence model, wherein the artificial intelligence model is used to identify a radio frequency fingerprint of the input signal and output an identification result corresponding to the radio frequency fingerprint; and determine, based on the identification result output by the artificial intelligence model, that the access network device is a legitimate device.

9. A communication apparatus, comprising:
a communication unit, configured to receive a first signal from an access network device; and
a processing unit, configured to: input the first signal into an artificial intelligence model, wherein the artificial intelligence model is used to identify a radio frequency fingerprint of the input signal and output an identification result corresponding to the radio frequency fingerprint; and determine, based on the identification result output by the artificial intelligence model, whether the access network device is a legitimate device or an illegitimate device.

10. The apparatus according to claim 9, wherein the communication unit is further configured to:
receive the artificial intelligence model from a network data analytics function device.

11. The apparatus according to claim 9 or 10, wherein the artificial intelligence model corresponds to area information, and the artificial intelligence model is valid in an area corresponding to the area information.

12. The apparatus according to any one of claims 9 to 11, wherein if the processing unit determines, based on the identification result, that the access network device is an illegitimate device, the processing unit is further configured to:
regard information carried by the first signal as invalid information, and ignore the information carried by the first signal.

13. The apparatus according to claim 12, wherein the information carried by the first signal is system information;
the information carried by the first signal is a synchronization signal/physical broadcast channel block; or
the information carried by the first signal is a system information change notification.

14. The apparatus according to any one of claims 9 to 13, wherein if the processing unit determines, based on the identification result, that the access network device is an illegitimate device, the processing unit is further configured to:
set a cell of the access network device as a cell on which camping is forbidden, and perform intra-frequency cell reselection.

15. The apparatus according to any one of claims 9 to 14, wherein if the processing unit determines, based on the identification result, that the access network device is an illegitimate device, the processing unit is further configured to:
delete the cell of the access network device from a cell selection/reselection candidate list.

16. A communication apparatus, comprising a processor and a memory, wherein
the processor is configured to execute a computer program or instructions stored in the memory, to enable the communication apparatus to implement the method according to any one of claims 1 to 7.

17. A computer-readable storage medium, storing a computer program or instructions, wherein when the computer program or the instructions are run on a computer, the computer is enabled to implement the method according to any one of claims 1 to 7.
